# EUROPÄISCHE PATENTSCHRIFT

(11) **EP 3 036 589 B1**
(45) Veröffentlichungstag und Bekanntmachung des Hinweises auf die Patenterteilung: **25.04.2018**
(21) Anmeldenummer: 14736809.6
(22) Anmeldetag: 08.07.2014
(51) Int. Cl.: G05B 19/042

(54) **GEGEN MANIPULATION GESCHÜTZTES ELEKTRONISCHES GERÄT**
ELECTRONIC DEVICE PROTECTED AGAINST MANIPULATION
APPAREIL ÉLECTRONIQUE PROTÉGÉ CONTRE DES MANIPULATIONS FRAUDULEUSES

(30) Priorität: 22.08.2013 DE 102013109096
(43) Veröffentlichungstag der Anmeldung: 29.06.2016
(73) Patentinhaber: Endress+Hauser Flowtec AG, 4153 Reinach (BL) (CH)
(72) Erfinder: FINK, Nikolai, CH-4147 Aesch (CH); UMKEHRER, Alfred, 87659 Hopferau (DE); KRETZLER, Timo, 79589 Binzen (DE); STAUDT, Wilhelm, CH-4147 Aesch (CH)
(74) Vertreter: Andres, Angelika Maria
(86) Internationale Anmeldenummer: PCT/EP2014/064576
(87) Internationale Veröffentlichungsnummer: WO 2015/024699

(56) Entgegenhaltungen:
- WO-A1-01/71439
- DE-A1- 19 963 208

## Beschreibung

Die Erfindung betrifft ein, insb. als Meß- und/oder Schaltgerät der industriellen Meß- und Automatisierungstechnik ausgebildetes und/oder für eine Verwendung im eichpflichtigen Güterverkehr geeignetes, elektronisches Gerät, das einen Mikroprozessor mit einem Dateneingang, mit einem Datenausgang und mit einem Steuereingang sowie wenigstens eine Speichereinheit umfaßt, sowie eine Verfahren zum Betreiben eines solchen elektronischen Geräts.

In der industriellen Meß- und Automatisierungstechnik werden, insb. auch im Zusammenhang mit der Automation chemischer oder verfahrenstechnischer Prozesse und/oder der automatisierten Steuerung von industriellen Anlagen oder aber auch im Zusammenhang mit dem Betrieb von eichpflichtigen Übergabesystemen, beispielsweise Betankungsanlagen oder Abfüllanlagen, unmittelbar an der jeweiligen Anlage installierte, gelegentlich auch als Feldgeräte bezeichnete, elektronische Geräte, eingesetzt. Solche elektronischen Geräte können aktorische Feldgeräte, beispielsweise elektronische Motor- bzw. Ventilsteuerungen, oder aber auch sensorische Feldgeräte, nämlich Meßgeräte, wie z.B. Coriolis-Massendurchfluß-Meßgeräte, vibronische Dichte-Meßgeräte, magnetisch-induktive Durchflußmeßgeräte, Wirbel-Durchflußmeßgeräte, Ultraschall-Durchflußmeßgeräte, thermische Massendurchfluß-Meßgeräte, Druck-Meßgeräte, Füllstand-Meßgeräte, vibronische Füllstands-Grenzschalter, Temperatur-Meßgeräte, pH-Wert-Meßgeräte etc., die jeweils der Ermittlung von eine jeweils innerhalb eines vorgegebenen Meßbereichs zeitlich veränderliche physikalische und/oder chemische Meßgröße repräsentierenden Meßwerten sowie der Erzeugung von jeweils wenigstes einem nämliche Meßwerte extern des jeweiligen Meßgeräts übertragenden - digitalen oder analogen - Meßwertsignal dienen, sein. Bei der im Falle eines als, ggf. auch eichfähiges, Meßgerät ausgebildeten elektronischen Geräts damit jeweils zu erfassenden Meßgröße kann es sich, je nach Anwendung, beispielsweise um einen Massendurchfluß, eine Dichte, eine Viskosität, einen Füll- oder einen Grenzstand, einen Druck, ein pH-Wert, eine elektrische Leitfähigkeit oder eine Temperatur oder dergleichen, eines flüssigen, pulver-, dampf- oder gasförmigen Mediums handeln, das in einem entsprechenden Behälter, wie z.B. einer Rohrleitung oder einem Tank, geführt bzw. vorgehalten wird. Solche als Meßgerät ausgebildeten, dem Fachmann an und für sich bekannte elektronischen sind u.a. in der EP-A 1 591 977, der GB-A 22 29 897, der US-A 2001/0016802, der US-A 2003/0236579, der US-A 2005/0137719, der US-A 2010/0026322, der US-A 2008/0288933, der US-A 2011/0062942, der US-A 56 72 975, der US-A 60 14 100, der US-A 61 40 940, der US-B 64 52 493, der US-B 64 72 884, der US-B 66 84 340, der US-B 68 54 055, der US-B 71 62 651, der US-B 72 96 482, der US-B 76 30 844, der US-B 77 78 784, der US-B 77 92 646, der WO-A 00/26739, der WO-A 00/48157, der WO-A 01/71291, der WO-A 03/106931, der WO-A 2008/091548, der WO-A 2009/002341, der WO-A 2011/005938, der WO-A 2012/009003, der WO-A 2012/159683, , der WO-A 2012/163608, der WO-A 88/02476, der WO-A 88/02853, der WO-A 94/20940, der WO-A 95/08123, der WO-A 95/08758, oder auch der eigenen, nicht vorveröffentlichten deutschen Anmeldung 102013100799.6 gezeigt bzw. werden von der Anmelderin selbst, beispielsweise unter der Bezeichnung t-trend ATT12, Promag 53H, Prowirl 73F, Promass E 200, Promass F 200, Promass 83X, oder Promass 84F, gewerblich angeboten.

Zum Erfassen der jeweiligen Prozeßgrößen weisen als Meßgerät ausgebildeten elektronische Geräte jeweils einen entsprechenden physikalisch-elektrischen oder chemisch-elektrischen Meßaufnehmer auf. Dieser ist zumeist in eine Wandung des das Medium jeweils führenden Behälters oder der in den Verlauf einer das Medium jeweils führenden Leitung, beispielsweise eine Rohrleitung, eingesetzt und dient dazu, wenigstens ein mit der zu erfassenden Meßgröße entsprechend korrespondierendes, nämlich deren zeitlichen Verlauf repräsentierenden zunächst analoges elektrisches Meßsignals zu generieren, das wiederum mittels einer an den Meßwandler elektrisch angeschlossenen Gerät-Elektronik weiterverarbeitet wird, derart, daß entsprechende Meßwerte für die Meßgrößen ermittelt werden. Die Gerät-Elektronik des jeweiligen Meßgeräts ist zumeist in einem vergleichsweise robusten, etwa schlag-, druck-, explosions- und/oder wetterfesten, Elektronik-Gehäuse untergebracht. Dieses kann z.B. vom Meßaufnehmer entfernt angeordnet und mit diesem nur über eine flexible Leitung verbunden sein; es kann aber auch direkt am Meßaufnehmer bzw. an einem den Meßaufnehmer separat einhausenden Meßaufnehmer-Gehäuse angeordnet sein.

Die Gerät-Elektronik von elektronischen Geräten der vorgenannten Art ist im Betrieb zudem über entsprechende Anschlußklemmen und damit verbundene elektrische Anschlußleitungen an ein vom jeweiligen Meßgerät zumeist räumlich entfernt angeordnetes, zumeist auch räumlich verteiltes, übergeordnetes elektronisches Datenverarbeitungssystem elektrisch angeschlossen. Im Falle eines als Meßgerät ausgebildeten, mithin sensorischen elektronischen Gerät werden beispielsweise an nämliches Datenverarbeitungssystem die vom jeweiligen Gerät erzeugten Meßwerte mittels des Meßwertesignals in einem vom Datenverarbeitungssystem verarbeitbaren Format weitergegeben. Sehr verbreitet ist hierbei, nicht zuletzt auch für den Fall, Meßwertsignale über größere, beispielsweise in der Größenordnung von 10 m bis einige hundert Meter liegende, Distanzen hinweg zu übertragen sind, die Verwendung von analogen Stromsignalen, nämlich von analogen Meßwertsignalen, bei denen eine momentane Stromstärke eines eingeprägten gleichwohl innerhalb einer vorgegebenen Meßspanne, nämlich innerhalb eines zur Übertragung von Meßwerten reservierten Strombereichs, veränderlichen Signalstrom jeweils genau einen Meßwert für die Meßgröße repräsentiert. In der industriellen Meßtechnik werden hierfür oftmals sogenannte 4 - 20 mA Stromschleifen, mithin als Meßwertesignale solche Signalströme verwendet, die innerhalb einer zwischen einer auf etwa 3,8 mA festgesetzten - gelegentlich auch als stromführender Nullpunkt oder Life-Zero-Wert bezeichneten - unteren Grenzstromstärke sowie einer auf etwa 20,5 mA festgesetzten oberen Grenzstromstärke liegenden Meßspanne veränderlich sind. Unterhalb bzw. oberhalb nämlicher, u.a. auch in der Norm DIN IEC 60381-1 definierten, Meßspanne liegende Stromstärkebereich sind bei 4 - 20 mA Stromschleifen zumeist für die Signalisierung vorab definierter, von einem dem normalen Meßbetrieb des jeweiligen Meßgeräts entsprechenden Normalbetriebsmodus abweichenden Sonderbetriebszuständen, beispielsweise Alarmzuständen infolge einer außerhalb eines für das Meßgerät spezifizierten Meßbereich liegende Meßgröße oder infolge eines Ausfalls des jeweiligen Meßaufnehmers, entsprechenden Sonderbetriebsmoden des Meßgeräts reserviert, etwa auch um den in der NAMUR-Empfehlung NE43:18.01.1994 formulierten Anforderungen an vereinheitlichte Signalpegel für die Ausfallinformation digitaler Meßumformer mit analogem Ausgangssignal zu genügen.

Zum Erzeugen des Meßwertsignals wird bei als Meßgeräte ausgebildeten elektronischen Geräten mittels einer, beispielsweise unmittelbar am Meßaufnehmer und/oder innerhalb des erwähnten Elektronik-Gehäuses angeordneten, Analog-zu-Digital-Wandlers zunächst aus dem analogen elektrischen Meßsignal des Meßwandlers ein dieses repräsentierendes digitales Meßsignal gewonnen. Zum weiteren Verarbeiten des digitalen Meßsignals, nämlich zum Erzeugen von die jeweilige Meßgröße repräsentierenden digitalen Meßwerten sowie zum Umwandeln nämlicher Meßwerte in zumindest ein extern des elektronischen Geräts bzw. dessen Gerät-Elektronik übertrag- und auswertbares Meßwertesignal, weist die jeweilige Gerät-Elektronik von Meßgeräten ferner eine das digitale Meßsignal empfangende Umformerschaltung auf. Wie u.a. auch in der eingangs erwähnten US-A 2001/0016802, US-A 2010/0026322, US-A 2011/0062942, US-B 76 30 844, US-B 77 92 646, US-B 77 78 784, US-B 64 52 493, US-A 60 14 100, WO-A 95/08123 oder WO-A 2012/009003 jeweils gezeigt, sind nämliche Umformerschaltungen bei modernen elektronischen Geräten der vorgenannten Art zumeist mittels eines, gelegentlich auch mehr als einen Prozessor und/oder eine digitalen Signalprozessors (DSP) aufweisenden, digitalen Mikroprozessors gebildet, dem über einen Dateneingang das digitale Meßsignal zugeführt ist. Nämlicher Mikroprozessor ist u.a. auch dafür eingerichtet, während des Betriebs in Ausführung wenigstens eines entsprechend vorgegebenen Ablaufprogramms automatisch via Dateneingang eingehende digitale Daten zu verarbeiten, beispielsweise also basierend auf dem digitalen Meßsignal am Dateneingang eine Meßwertefolge, nämlich nach Maßgabe des Ablaufprogramms eine einen zeitlichen Verlauf der Meßgröße repräsentierende Sequenz von für verschiedene Zeitpunkte gewonnenen, die Meßgröße jeweils momentan repräsentierenden digitalen Meßwerten zu generieren, und basierend auf nämlicher Datenverarbeitung ermittelte digitale Daten an einem entsprechenden Datenausgang auszugeben. Die digitalen Daten am Datenausgang können demnach beispielsweise in Echtzeit ausgegebene digitale Meßwerte sein. Zur Speicherung des wenigstens einen Ablaufprogramms weisen Umformerschaltungen der vorgenannten Art, mithin das damit jeweils gebildete elektronische Gerät üblicherweise einen oder mehrere entsprechende nichtflüchtige Speicher zum Speichern eines Programmcodes für das wenigstens eine Ablaufprogramm bzw., im Falle eines modulartig organisierten Ablaufprogramm, von mehreren einzelnen Programmcodemodulen sowie wenigstens einen flüchtigen Speicher auf, in den das vom Mikroprozessor auszuführende Ablaufprogramm während des Betriebs des elektronischen Geräts entsprechend geladen werden kann.

Für den erwähnten Fall, daß das als Meßwertsignal ein analoges Stromsignal ausgegeben werden soll, weisen Umformerschaltungen der vorgenannten Art, mithin damit gebildete elektronische Geräte ferner eine vom Mikroprozessor gesteuerte Stromschnittstelle mit wenigstens einem Stromausgang und mit einem mit dem Datenausgang des Mikroprozessors gekoppelten Steuereingang auf, die dafür eingerichtet ist, den Signalstrom durch den Stromausgang fließen zu lassen und währenddessen die Stromstärke des Signalstroms auf einen vom Mikroprozessor am Datenausgang vorgegebenen, beispielsweise also dem aktuell ermittelten Meßwert entsprechenden, stationären Stromstärkepegel einzuregeln. Die Stromschnittstelle kann hierbei als eine passive, nämlich einen von einer extern des Meßgeräts angeordneten Versorgungsschaltung getriebenen Strom im Sinne einer Lastmodulation einstellende Schnittstelle, oder als aktive, nämlich einen von einer internen Versorgungsschaltung des Meßgeräts getriebenen Strom variierende Schnittstelle ausgebildet sein.

Elektronische Geräte der in Rede stehenden Art sind auch nach deren Inbetriebnahme, im Falle eines Meßgeräts beispielsweise nämlich nachdem es den regulären Meßbetrieb aufgenommen hat, mithin nachdem der Mikroprozessor in einen normalen Betriebsmodus versetzt ist, in dem er das wenigstens Ablaufprogramm ausführen kann bzw. ausführt, gelegentlich daraufhin zu überprüfen - sei es auf Veranlassung des das Gerät betreibenden Anwenders und/oder auf Anforderung einer die mittels des elektronischen Geräts gebildete Meßstelle beaufsichtigenden Behörde -, ob die geforderte bzw. in der Spezifikation ausgewiesene Meßgenauigkeit, nämlich jene Genauigkeit, mit der die Meßwerte für die Meßgröße ermittelt werden bzw. mit der die Meßgröße schlußendlich auf das Meßwertsignal abgebildet wird, nach wie vor verläßlich erreicht ist; dies nicht zuletzt auch für den Fall, daß das elektronische Gerät, wie bereits erwähnt, im eichpflichtigen Güterverkehr, etwa als Bestandteil eines eichpflichtigen Übergabesystems, verwendet wird. Im Zuge einer solchen, beispielsweise im Sinne einer Kalibrierung oder einer erneuten Eichung durchgeführten, Überprüfung von elektronischen Geräten der in Rede stehenden Art kann es dann gelegentlich auch erforderlich werden, daß der Mikroprozessor zum Zwecke einer Justierung der Umformerschaltung entsprechend zu reprogrammieren ist, derart, daß das wenigstens eine Ablaufprogramm bzw. dessen Programmcode entsprechend revidiert wird, in dem ein Wert eines Parameters, der die Ausführung nämlichen Ablaufprogramms durch den Mikroprozessor beeinflußt, bzw. Werte von mehreren solcher die Ausführung des wenigstens einen Ablaufprogramms durch den Mikroprozessor beeinflussenden Parametern verändert werden.

Derartige Modifikationen an einem oder mehreren solcher Ablaufprogramme, nicht zuletzt auch solche, die ein Herbeiführen der geforderten Meßgenauigkeit bezwecken, dürfen bzw. können bei elektronischen Geräten der vorbeschriebenen Art, nicht zuletzt auch solchen, die einer Eichpflicht unterliegen, üblicherweise nicht vorgenommen werden, wenn der Mikroprozessor im normalen Betriebsmodus, im Falle eines als Meßgerät betriebenen Geräts also im normalen Meßbetrieb, arbeitet. Vielmehr ist der Mikroprozessor dafür, beispielsweise auch unter Aufsicht eines mit der Überprüfung beauftragten bzw. behördlich bestellten Prüfers, zunächst in einen entsprechenden, nämlich Modifikationen gestattenden Sonderbetriebsmodus zu versetzen. Die für die Modifikation des Ablaufprogramms erforderlichen Eingaben können beispielsweise über ein entsprechendes bordeigenes Bedienelement des elektronischen Geräts und/oder über ein mit dem Mikroprozessor via als Serviceschnittstelle ausgebildeten Adapter kommunizierendes externes Bediengerät vorgenommen werden.

Um eine Manipulation des elektronischen Geräts, nämlich eine unautorisierte Modifikation des Ablaufprogramms nach einer Abnahme bzw. Freigabe des jeweiligen elektronischen Geräts, etwa infolge eines unbedarften Zugriff auf einen in den vorbezeichneten Sonderbetriebsmodus versetzten Mikroprozessor durch nicht befugtes Personal, zu vermeiden bzw. ggf. möglichst frühzeitig entdecken zu können, sind an elektronischen Geräten der in Rede stehenden Art zumeist entsprechende Schutzmaßnahmen gegen unerlaubten der Zugriff auf den Sonderbetriebsmodus vorgesehen. Solche Schutzmaßnahmen bestehen häufig in einem passwortgeschützten Zugang zum Mikroprozessor in Kombination mit einem in einem innerhalb des Elektronik-Gehäuses angebrachten, nur manuell und nur nach Öffnen des Elektronik-Gehäuses betätigbaren Schalter zum Aktivieren des Sonderbetriebsmodus bzw. zum erneuten Deaktivieren des Sonderbetriebsmodus. Dafür ist der, beispielsweise als DIP-Schalter ausgebildete, Schalter eingerichtet, um am Steuereingang des Mikroprozessors einen den zweiten Betriebsmodus aktivierenden, beispielsweise auch sowohl den zweiten Betriebsmodus aktivierenden als auch zugleich den ersten Betriebsmodus deaktivierende, Signalpegelverlauf, beispielsweise inform einer Bitfolge, zu generieren. Zudem ist nämlicher Schalter, nicht zuletzt auch bei der Eichpflicht unterliegenden elektronischen Geräten und/oder aus Garantie- und Haftungsgründen, zumeist auch vor unbefugtem bzw. unerkanntem Betätigen geschützt, beispielsweise indem daran und/oder am Elektronik-Gehäuses ein Siegel, etwa inform eines Klebeetiketts oder einer Plombe, angebracht ist, das ein Öffnen des Elektronik-Gehäuses bzw. ein Betätigen des Schalter zunächst verwehrt, und das zudem nicht entfernt werden kann, ohne erkennbar zerstört zu werden.

In der DE 199 63 208 A1 ist ein einen Mikrocomputer sowie eine programmierbare Speichereinrichtung aufweisendes programmierbares Steuergerät gezeigt, an das zum Programmieren/Umprogrammieren ein externes Programmiergerät über eine K-Leitung und einen Diagnosestecker angeschlossen werden kann und an das danach neue Daten und/oder ein neues Steuerprogramm über die K-Leitung den Mikrocomputer und eine Datenleitung übertragen werden können. In der Speichereinrichtung können Daten und Steuerprogramme zum Betrieb des Steuergeräts und zur Steuerung/Regelung von bestimmten Funktionen des Kraftfahrzeugs abgelegt werden. Einhergehend mit jedem Programmierungs-/Umprogrammierungsvorgang der programmierbaren Speichereinrichtung werden auch Informationen über den Programmierungs-/Umprogrammierungsvorgang in einem separaten Speicherbereich der Speichereinrichtung abgespeichert. Diese Informationen können beispielsweise die kumulierte Anzahl der Programmierungs-/Umprogrammierungsvorgänge der Speichereinrichtung umfassen. Der Inhalt des separaten Speicherbereichs kann wieder ausgelesen und mit zuvor dokumentierten Informationen des Speicherbereichs verglichen werden, um so Manipulationen des Steuergeräts erkennen zu können, insbesondere auch eine unbefugte Manipulation des Steuerprogramms in dem Steuergerät zuverlässig nachweisen zu können. Ein Nachteil solcher konventionellen Schutzmaßnahmen an elektronischen Geräten der vorgenannten Art ist zum einen darin zu sehen, daß zum einen eine Vielzahl von Passwörtern hantiert, nämlich erzeugt, verwaltet, und erneuert werden müssen und zudem auch an in der Regel mehrere zur Modifikation von Ablaufprogrammen befugte Personen zurückverfolgbar dokumentiert zu übermitteln sind, mithin ein enormer organisatorischer, nicht zuletzt aber auch ein enormer informationstechnischer Aufwand seitens des Betreibers des jeweiligen Geräts zu bewerkstelligen ist. Umgekehrt muß das jeweilige Passwort vor Ort über eine aus Platzgründen zumeist sehr klein gehaltenes Bedienelement eingegeben werden bzw. müssen die allfällig gebrochene Siegel nach Verlassend des Sonderbetriebsmodus entsprechend wieder angebracht werden. Zudem kann aber auch der Fall auftreten, daß ein für einen spontanen Zugriff auf den Sonderbetriebsmodus, etwa bei Fehllieferung bzw. -bestellung, bei Fehlparametrierung bzw. Auftreten eines Fehlers im Betrieb, durch dafür eigentlich befugtes Personal erforderliche aktuelle Passwort vor Ort zunächst nicht zu Verfügung steht, sei es aus Gründen fehlerhafter Übermittlung oder bedingt durch ein Überschreiten eines Verfallsdatums eines bis anhin gültigen Passworts, oder auch daß ein Passwort in einer eine länger andauernde Sperrung des Zugriffs auf den Sonderbetriebsmodus herbeiführenden Weise mehrmals falsch eingegeben wird, jeweils einhergehend mit entsprechenden Verzögerungen allfällig dringlicher Änderungsmaßnahmen am Gerät. Zum anderen sind diese Schutzmaßnahmen auch nicht in der Lage, den Zeitpunkt einer allfälligen Manipulation des betroffenen Geräts zu dokumentieren, so daß eine entsprechende Rückverfolgung eines solchen Vorgangs nicht unterstützt ist. Darüberhinaus ist aber auch keine der vorgenannten Schutzmaßnahmen völlig bzw. unüberwindbar gegen unerkannten Mißbrauch bzw. gegen unerkannte Fälschung gesichert.

Dem Rechnung tragend besteht eine Aufgabe der Erfindung darin, eine Schutzmaßnahme für ein elektronisches Gerät anzugeben, die einerseits einen vergleichsweise einfachen Zugriff auf einen Modifikationen an einem von einem Mikroprozessor in einem regulären Betriebsmodus auszuführenden Ablaufprogramm gestattenden Sonderbetriebsmodus ermöglicht und die anderseits in der Lage ist, jedweden Zugriff auf nämlichen Sonderbetriebsmodus verläßlich zu dokumentieren, ggf. auch unter Verzicht auf passwort- und/oder siegel-basierten Schutzmaßnahmen.

Zur Lösung der Aufgabe besteht die Erfindung in einem elektronischen Gerät, das einen Mikroprozessor mit einem Dateneingang, mit einem Datenausgang und mit einem Steuereingang sowie wenigstens eine, beispielsweise mittels eines persistenten Speicherbausteins gebildete, Speichereinheit umfaßt. Der Mikroprozessor des erfindungsgemäßen elektronischen Geräts weist wenigstens zwei, beispielsweise ausschließlich, via Steuereingang, etwa mittels binärer Signalpegel bzw. damit gebildeten Taktsequenzen, selektiv aktivierbare Betriebsmodi auf und ist zudem dafür eingerichtet, in einem ersten Betriebsmodus wenigstens ein vorgegebenes Ablaufprogramm auszuführen, um via Dateneingang eingehende digitale Daten, beispielsweise zu digitalen Meßwerten, zu verarbeiten und/oder um digitale Daten, beispielsweise auch in Echtzeit, am Datenausgang auszugeben, sowie in einem, beispielsweise alternativ oder auch simultan zum ersten Betriebsmodus aktivierbaren, zweiten Betriebsmodus reprogrammierbar zu sein, derart, daß wenigstens ein Wert eines Parameters, der die Ausführung des wenigstens einen Ablaufprogramms durch den Mikroprozessor beeinflußt, veränderbar ist. Zudem ist die Speichereinheit des des erfindungsgemäßen elektronischen Geräts dafür eingerichtet, auf eine jede Aktivierung des zweiten Betriebsmodus mit einer Veränderung eines Speicherinhalts zu reagieren, derart, daß nämlicher Speicherinhalt eine Häufigkeit, mit der der zweite Betriebsmodus innerhalb eines vorgegebenen Zeitraums aktiviert worden ist, repräsentiert.

Ferner besteht die Erfindung auch darin, ein solches elektronisches Geräts im eichpflichtigen Güterverkehr, beispielsweise zum Ermitteln von Meßwerten für eine physikalische oder chemische Meßgröße eines, beispielsweise fluiden, Mediums, beispielsweise eines Gase oder einer Flüssigkeit, zu verwenden.

Darüberhinaus besteht die Erfindung auch in einem Verfahren zum Betreiben eines solchen, beispielsweise auch im im eichpflichtigen Güterverkehrverwendeten, elektronischen Geräts, welches Verfahren umfaßt:
- Aktivieren des ersten Betriebsmodus zum Ausführen des wenigstens einen Ablaufprogramms mittels des Mikroprozessors;
- Aktivieren des zweiten Betriebsmodus zum Reprogrammieren des Mikroprozessors;
- und Verändern des Speicherinhalts um einen vorgegeben Betrag, derart, daß nämlicher Speicherinhalt eine um nämlichen Betrag erhöhte Häufigkeit, mit der der zweite Betriebsmodus innerhalb eines vorgegebenen Zeitraums aktiviert worden ist, repräsentiert.

Nach einer ersten Ausgestaltung der Erfindung ist der Mikroprozessor dafür eingerichtet, im ersten Betriebsmodus nicht reprogrammierbar zu sein, beispielsweise auch derart, daß der Wert keines die Ausführung des wenigstens einen Ablaufprogramms durch den Mikroprozessor beeinflussenden Parameters veränderbar ist.

Nach einer zweiten Ausgestaltung der Erfindung ist vorgesehen, daß der Speicherinhalt einen Zahlenwert für eine einen Zählerstand repräsentierende Zählervariable umfaßt, welcher Zahlenwert bei Aktivierung des zweiten Betriebsmodus jeweils um einen vorgegebenen Betrag, beispielsweise Eins, verändert wird, beispielsweise nämlich jeweils um ein vorgegebenes Inkrement erhöht oder jeweils um ein vorgegebenes Dekrement verringert wird.

Nach einer dritten Ausgestaltung der Erfindung ist vorgesehen, daß der Speicherinhalt einen Zahlenwert für eine einen Zeitpunkt, beispielsweise einer Betriebszeit und/oder einem Datum und einer Uhrzeit, einer Aktivierung des zweiten Betriebsmodus repräsentierende Zeitvariable umfaßt

Nach einer vierten Ausgestaltung der Erfindung ist vorgesehen, daß der Speicherinhalt einen Zahlenwert für eine einen Zeitpunkt, beispielsweise einer Betriebszeit und/oder einem Datum und einer Uhrzeit, einer Aktivierung des ersten Betriebsmodus repräsentierende Zeitvariable umfaßt.

Nach einer fünften Ausgestaltung der Erfindung ist die Speichereinheit dafür eingerichtet, wenigstens einen mit einer Aktivierung des zweiten Betriebsmodus korrespondierenden Zeitwert, beispielsweise inform einer Kombination aus einem entsprechenden Datum und/oder einer entsprechenden Uhrzeit, zu speichern und/oder wenigstens einen zu einem Zeitpunkt einer Aktivierung des zweiten Betriebsmodus am Datenausgang vorliegenden Datenwert, beispielsweise in Kombination mit einer seit einer vorherigen Inbetriebnahme inzwischen vergangenen Betriebszeit und/oder in Kombination mit einem entsprechenden Datum und/oder einer entsprechenden Uhrzeit, zu speichern. Ferner kann die Speichereinheit zudem auch dafür eingerichtet sein, zusätzlich auch wenigstens einen mit einer Deaktivierung des zweiten Betriebsmodus korrespondierenden Zeitwert, beispielsweise inform einer seit einer vorherigen Inbetriebnahme inzwischen vergangenen Betriebszeit und/oder inform einer Kombination aus einem entsprechenden Datum und/oder einer entsprechenden Uhrzeit, zu speichern.

Nach einer sechsten Ausgestaltung der Erfindung ist die Speichereinheit ferner dafür eingerichtet, wenigstens einen mit einer Aktivierung des ersten Betriebsmodus korrespondierenden Zeitwert, beispielsweise inform einer seit einer vorherigen Inbetriebnahme inzwischen vergangenen Betriebszeit und/oder inform einer Kombination aus einem entsprechenden Datum und/oder einer entsprechenden Uhrzeit, zu speichern.

Nach einer ersten Weiterbildung der Erfindung umfaßt das elektronische Gerät weiters einen Adapter, der dafür eingerichtet ist, von einem externen Bediengerät, beispielsweise per Funk, mittels infrarotem Licht oder via Zweidraht-Leitung, einen ein Aktivieren des zweiten Betriebsmodus anfordernden Steuerbefehl zu empfangen und in einen den zweiten Betriebsmodus aktivierenden Signalpegelverlauf, beispielsweise inform einer Bitfolge, am Steuereingang des Mikroprozessors umzusetzen. Der Adapter kann beispielsweise dafür eingerichtet sein, nämlichen Steuerbefehl vom Bediengerät drahtlos, beispielsweise per Funk oder mittels infrarotem Licht, und/oder leitungsgebunden, beispielsweise via Zweidraht-Leitung, zu empfangen. Der Adapter kann hierbei im besonderen eingerichtet sein, einen gemäß einem Industriestandard IEEE 802.15.1 (Bluetooth) für Kurzstrecken Funkverbindungen und/oder gemäß einem Industriestandard IEEE 802.15.4 (WirelessHART) übertragenen Steuerbefehl vom Bediengerät drahtlos per Funk zu empfangen und hernach zu verarbeiten, nämlich in den den zweiten Betriebsmodus aktivierenden Signalpegelverlauf zu wandeln. Ferner kann der Adapter auch dafür eingerichtet sein, einen gemäß einer Norm IEC 61158 (HART) übertragenen Steuerbefehl vom Bediengerät leitungsgebunden via Zweidraht-Leitung zu empfangen und hernach zu verarbeiten, nämlich in den den zweiten Betriebsmodus aktivierenden Signalpegelverlauf zu wandeln.

Nach einer zweiten Weiterbildung der Erfindung umfaßt das elektronische Gerät weiters ein Elektronik-Gehäuse innerhalb dem der Mikroprozessor sowie der persistente Speicher untergebracht sind.

Nach einer dritten Weiterbildung der Erfindung umfaßt das elektronische Gerät weiters einen manuell betätigbaren, beispielsweise siegelbaren und/oder abschließbaren, Schalter, der dafür eingerichtet ist, auf eine Betätigung hin am Steuereingang des Mikroprozessors einen den zweiten Betriebsmodus aktivierenden, beispielsweise sowohl den zweiten Betriebsmodus aktivierenden als auch zugleich den ersten Betriebsmodus deaktivierende, Signalpegelverlauf, beispielsweise inform einer Bitfolge, zu generieren. Insbesondere kann das elektronische Gerät bei dieser Weiterbildung ferner auch ein am Schalter angebrachtes, etwa mittels einer Plombe oder mittels eines Klebeetiketts gebildetes, Siegel umfassen. Darüberhinaus kann der Schalter ferner dafür eingerichtet sein, nach einer entsprechenden Betätigung am Steuereingang des Mikroprozessors einen den zweiten Betriebsmodus deaktivierenden, beispielsweise sowohl den zweiten Betriebsmodus deaktivierenden als auch zugleich den ersten Betriebsmodus aktivierenden, Signalpegelverlauf, beispielsweise inform einer Bitfolge, zu generieren.

Nach einer vierten Weiterbildung der Erfindung umfaßt das elektronische Gerät weiters ein Anzeigeelement, das dafür eingerichtet ist, die durch den Speicherinhalt der Speichereinheit repräsentierte Häufigkeit, mit der der zweite Betriebsmodus innerhalb des vorgegebenen Zeitraums aktiviert worden ist, zu visualisieren und/oder zu signalisieren, welcher Betriebsmodus momentan aktiviert ist.

Nach einer fünften Weiterbildung der Erfindung umfaßt das elektronische Gerät weiters einen Meßaufnehmer- beispielsweise . einen magnetisch-induktiven Durchflußaufnehmer, einen Ultraschall-Durchflußaufnehmer, einen thermischen Massenstromsensor, einen Wirbeldurchflußsensor, einen Coriolis-Massendurchflußaufnehmer, einen vibronischen Dichteaufnehmer, einen virbronischen Viskositätsaufnehmer, einen Drucksensor, einen pH-Sensor, einen Temperatursensor etc. - zum Erfassen einer physikalischen und/oder chemischen Meßgröße - beispielsweise einer Dichte, einer Viskosität, einer Temperatur und/oder einem Druck eines Fluids, einer Volumendurchflußrate bzw. einer Massendurchflußrate eines in einer Leitung geführten Fluids, eines Füllstands oder eines Grenzstands eines in einem Behälter vorgehaltenen Mediums etc. - und zum Generieren von Meßdaten, nämlich die wenigstens eine Meßgröße repräsentierenden digitalen Daten. Ferner ist der Mikroprozessor bei nämlicher Weiterbildung der Erfindung dafür eingerichtet, die Meßdaten am Dateneingang zu empfangen, und via Dateneingang eingehende Meßdaten im ersten Betriebsmodus in Ausführung des Ablaufprogramms zu verarbeiten, beispielsweise auch, um im ersten und/oder im zweiten Betriebsmodus am Datenausgang Meßwerte, nämlich in Ausführung des Ablaufprogramms und unter Verwendung der Meßdaten berechnete digitale Daten, auszugeben. Alternativ oder in Ergänzung kann die Speichereinheit ferner auch dafür eingerichtet sein, wenigstens einen, beispielsweise unmittelbar und/oder zuletzt, vor einem Zeitpunkt einer Aktivierung des zweiten Betriebsmodus vom Mikroprozessor ermittelten Meßwert, beispielsweise in Kombination mit einer seit einer vorherigen Inbetriebnahme inzwischen vergangenen Betriebszeit und/oder in Kombination mit einem entsprechenden Datum und/oder einer entsprechenden Uhrzeit, zu speichern.

Ein Grundgedanke der Erfindung besteht darin, die bei elektronischen Geräten der in Rede stehenden Art, nicht zuletzt auch bei eichpflichtigen Feldgeräten, erforderlichen Schutzmaßnahmen gegen Manipulation, nämlich gegen unautorisierte, mithin die Integrität des jeweiligen Geräts zerstörende Modifikationen wenigstens eines Ablaufprogramms nach einer Abnahme des jeweiligen elektronischen Geräts dahingehend zu verbessern, daß allfällige zwischenzeitliche Zugriffe auf das Ablaufprogramm automatisch erfaßt und daraufhin im Gerät maschinenlesbare, mithin unmittelbar vor Ort wieder anzeigbare Einträgen abgespeichert werden, und zwar derart, daß bereits jedwede neuerliche Aktivierung des Modifikationen des Ablaufprogramms ermöglichenden (Sonder-) Betriebsmodus jeweils automatisch eine entsprechende Änderung eines Speicherinhalts in der Speichereinheit erzwingt, und zwar noch bevor irgendeine Modifikation des Ablaufprogramm erfolgen kann bzw. tatsächlich erfolgt ist. Die nämliche Aktivierung dokumentierenden Einträge können dabei ohne weiteres vergleichsweise manipulationssicher im jeweiligen Gerät vorgehalten werden, wenn der Zugriff auf die Speichereinheit bzw. den die Aktivierung dokumentierenden Speicherinhalt ausnahmslos über den Mikroprozessor erfolgt.

Ein Vorteil der vorliegenden Erfindung ist u.a. darin zu sehen, daß zum einen auf sehr einfache, gleichwohl sehr auffällige Weise vor Ort, nämlich unmittelbar am jeweiligen elektronischen Gerät signalisiert werden kann, ob eine Manipulation, mithin eine Zerstörung der Integrität nämlichen Geräts zu besorgen ist. Zum anderen kann für den Fall, daß bei jeder Aktivierung der Speicherinhalt nach einer fest vorgegebenen Regel immer in gleicher Weise geändert wird, beispielsweise durch eine schrittweise Erhöhung eines des nach Art eines Zählerstandes ausgestalteten Speicherinhalts um ein vorgegebenes Inkrement und/oder durch entsprechendes Eintragen einer solchen Aktivierung zusammen mit einem damit korrespondierenden Datum und/oder einer damit korrespondierenden Uhrzeit, zudem auch ermittelt werden, wie oft bzw. ggf. auch wann in den zweiten Betriebsmodus gewechselt worden ist.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich. Im einzelnen zeigen:
- Fig. 1: schematisch nach Art eines Blockschaltbildes ein, insb. für den Verwendung in der industriellen Meß- und Automatisierungstechnik geeignetes, elektronisches Gerät;
- Fig. 2: schematisch nach Art eines Blockschaltbildes elektronisches Gerät gemäß Fig. 1, ausgestaltetet als ein Meßgerät;
- Fig. 3: das elektronische Gerät gemäß Fig. 2 in einer Seitenansicht; und
- Fig. 4: schematisch nach Art eines Blockschaltbildes elektronisches Gerät gemäß Fig. 1, ausgestaltetet als ein aktorisches Feldgerät.

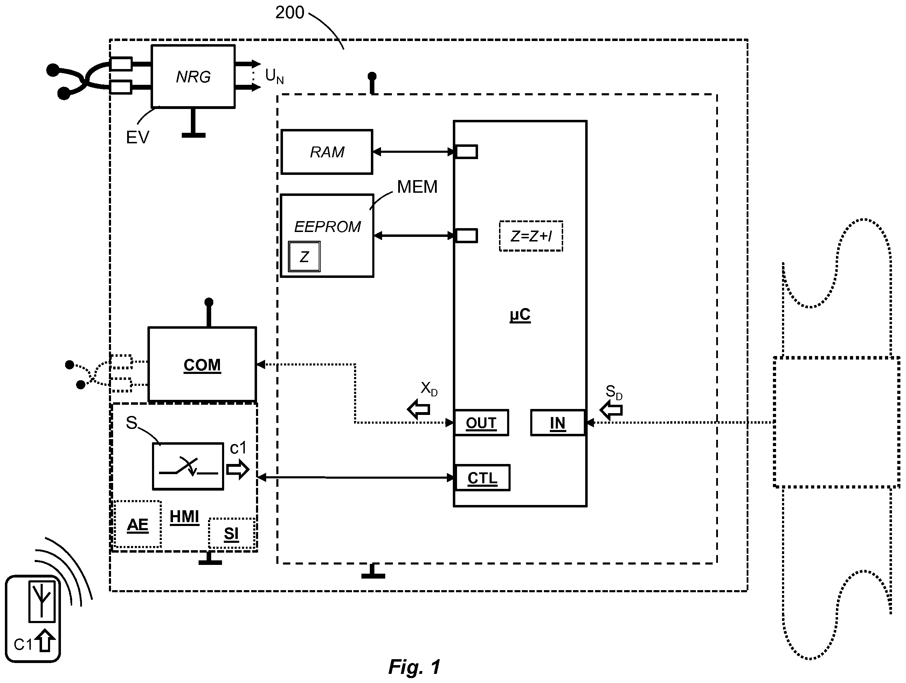

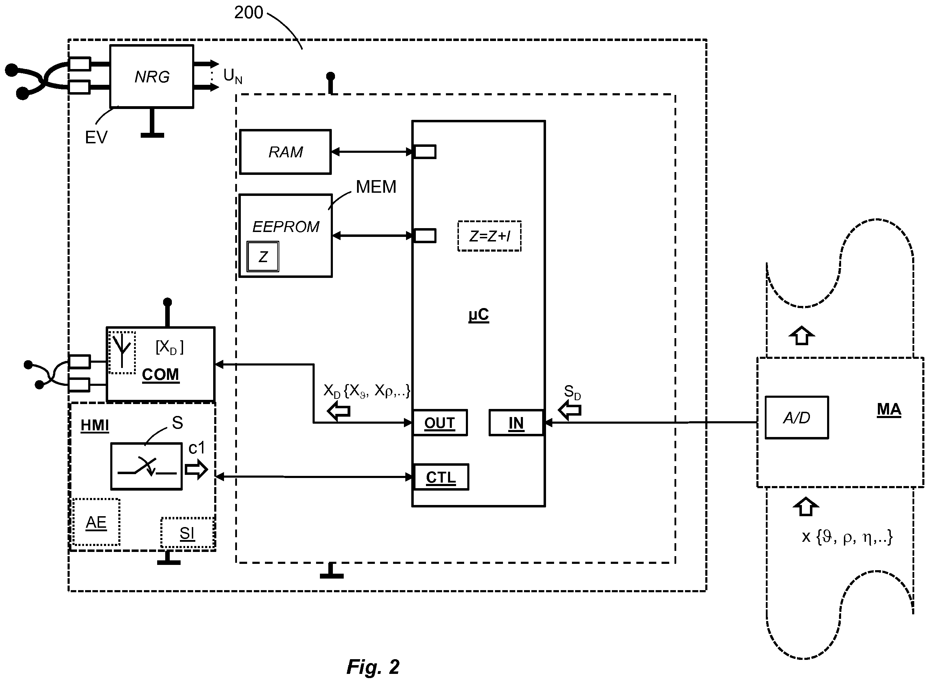

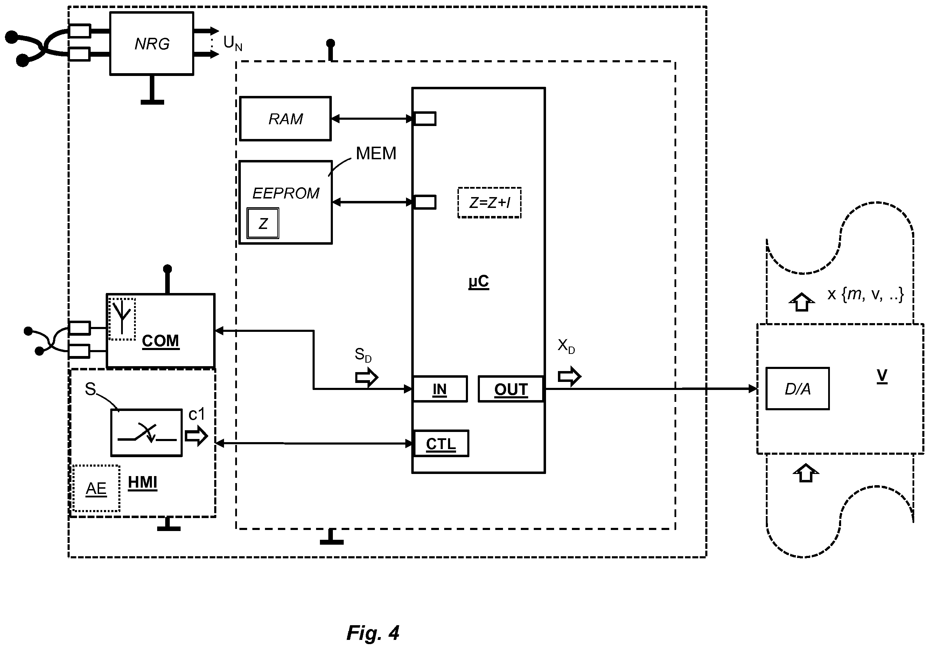

In der Fig. 1 ist schematisch nach Art eines Blockschaltbildes ein Ausführungsbeispiel für eine, insb. für die Verwendung in der industriellen Meß- und Automatisierungstechnik geeignetes, elektronisches Gerät. Das elektronische Gerät kann beispielsweise, wie auch in Fig. 2 schematisiert dargestellt, als ein sensorisches Felderät, nämlich beispielsweise als ein Meßgerät zum Erfassen einer physikalischen Größe eines in einer Rohrleitung strömenden Mediums oder eines in einem Vorratsbehälter vorgehaltenen Mediums, oder aber auch, wie in Fig. 4 schematisiert dargestellt, als ein aktorisches Feldgerät, beispielsweise nämlich eine elektronische Steuerung für einen Motor- oder ein Ventil V, ausgebildet sein bzw. verwendet werden. Das elektronische Gerät umfaßt einen Mikroprozessor µC, mit einem Dateneingang IN, einem Datenausgang OUT sowie einem Steuereingang CTL. Der Mikroprozessor µC ist gemäß einer weiteren vorteilhaften Ausgestaltung der Erfindung in einem entsprechenden, insb. schlag- und/oder auch explosionsfest und/oder hermetisch dicht ausgebildeten und/oder modular aufgebauten, Elektronik-Gehäuse 200 untergebracht. Des weiteren weist das elektronische Gerät im hier gezeigten Ausführungsbeispiel ferner eine von einer externen Energieversorgung gespeiste Energieversorgungsschaltung EV mit einem, zwei Anschlußelektroden aufweisenden, Eingang und mit wenigstens einem Ausgang auf, die ebenfalls innerhalb des Elektronik-Gehäuses untergebracht ist und die dazu dient, an nämlichem Ausgang eine für den Betrieb des Geräts benötigte elektrische Nutzleistung mit zumindest einer, insb. auch auf den Mikroprozessor µC, abgestimmten Nutzspannung U_{N} bereitzustellen.

Der Mikroprozessor µC des erfindungsgemäßen elektronischen Geräts weist ferner wenigstens zwei via Steuereingang CTL, beispielsweise mittels entsprechend gesetzter binärer Signalpegel bzw. damit gebildeten Taktsequenzen, selektiv aktivierbare Betriebsmodi auf. Insbesondere ist der Mikroprozessor nämlich dafür eingerichtet, in einem ersten Betriebsmodus wenigstens ein vorgegebenes Ablaufprogramm auszuführen, um, wie in Fig. 1 schematisch dargestellt, via Dateneingang IN eingehende digitale Daten S_{D}, beispielsweise von extern des Mikroprozessors zugeführte digitale Meßwerte, zu verarbeiten und/oder um digitale Daten X_{D}, beispielsweise auch in Echtzeit, am Datenausgang OUT auszugeben. Zum Ausführen nämlichen Ablaufprogramms weist das elektronische Gerät ferner einen mit dem Mikroprozessor elektrisch verbunden - beispielsweise mit diesem zusammen auf ein und demselben Mikrochip untergebrachten - als Arbeitsspeicher konfigurierten flüchtigen Speicherbaustein (RAM) auf, der einen Direktzugriff des Mikroprozessors µC ermöglicht und in den das entsprechend kompilierte Ablaufprogramm zwecks dessen Ausführung durch Mikroprozessor zur Laufzeit geladen werden kann. Ferner kann das Gerät eine, beispielsweise mittels des Mikroprozessors oder mittels eines separaten Chip (IC) realisierte, Echtzeituhr zum Ermitteln einer aktuellen Uhrzeit und/oder einen, beispielsweise mittels des Mikroprozessors realisierten, Betriebsstundenzähler zum Ermitteln seit einer vorherigen Inbetriebnahme - oder auch einem anderen für den Betrieb des Geräts relevanten Zeitpunkt - inzwischen vergangenen Zeit, aufweisen.

Um einen Dialog zwischen dem elektronischen Gerät und einem vor Ort damit interagierenden Nutzer zu ermöglichen, ist beim elektronischen Gerät ferner eine entsprechende Mensch-Maschine-Schnittstelle HMI vorgesehen. Diese kann z.B. ein mit dem Mikroprozessor µC kommunizierendes, insb. ein vom Mikroprozessor angesteuertes und/oder portables, Anzeige- bzw. Anzeige- und Bedienelement AE aufweisen, wie etwa ein im Elektronik-Gehäuse 200 hinter einem darin entsprechend vorgesehenen Fenster plaziertes LCD-, OLED- oder TFT-Display sowie eine entsprechende Eingabetastatur und/oder ein Touchscreen, das beispielsweise auch dafür eingerichtet sein, die vom Mikroprozessor generierten digitale Daten X_{D} vor Ort, nämlich direkt am Gerät anzuzeigen. Zudem kann die Mensch-Maschine-Schnittstelle HMI auch dafür vorgesehen sein, zusammen mit einem externen Bediengerät eine Kommunikationsverbindung, beispielsweise eine funkwellenbasierte, eine infrarotlichtbasierte oder eine drahtgebundene Datenverbindung, bereitzustellen, über die ein Nutzer vor Ort via Bediengerät den Mikroprozessor steuernde Befehle an das elektronische Gerät übergeben kann.

Zum Bilden einer solchen, beispielsweise gemäß einem der Industriestandards IEEE 802.15.1 (Bluetooth) für Kurzstrecken Funkverbindungen, IEEE 802.15.4 (WirelessHART) bzw. IEC 61158 (HART) ausgebildete, Kommunikationsverbindung weist das elektronische Gerät nach einer weiteren Ausgestaltung einen Adapter SI auf, der dafür eingerichtet ist, von einem externen Bediengerät, beispielsweise per Funk, mittels infrarotem Licht oder via Zweidraht-Leitung, einen oder mehrere den Mikroprozessor bzw. die Ausführung des jeweils geladenen Ablaufprogramms beeinflussenden Steuerbefehle zu empfangen und in entsprechende Signalpegel an einem oder mehreren Steuereingängen des Mikroprozessors, insb. auch dem erwähnten Steuereingang CTL, umzusetzen.

Darüberhinaus können hier gezeigten Ausführungsbeispiel die mittels des Mikroprozessors generierten Daten im Betrieb mittels einer dafür im elektronischen Gerät vorgesehen Datenkommunikation-Schnittstelle COM an ein dem elektronischen Gerät übergeordneten elektronischen Datenverarbeitungssystem, beispielsweise einer speicherprogrammierbaren Steuerung (SPS), einem Personalcomputer und/oder einer Workstation, über ein an nämliche Datenkommunikation-Schnittstelle COM angekoppeltes Datenübertragungssystem, beispielsweise einem Ethernet, einem Feldbus und/oder einem Funknetz, Meß- und/oder andere Betriebsdaten, ggf. auch in Echtzeit, gesendet werden, um dort weiter ausgewertet bzw. weiter verarbeitet zu werden.

Zusätzlich zum ersten Betriebsmodus ist beim Mikroprozessor des erfindungsgemäßen elektronischen Geräts ein zweiter Betriebsmodus vorgesehen, in dem der Mikroprozessor reprogrammierbar ist, derart, daß das wenigstens eine Ablaufprogramm modifizierbar ist, nämlich wenigstens ein Wert eines Parameters, der die Ausführung nämlichen Ablaufprogramms durch den Mikroprozessor beeinflußt, veränderbar ist. Nämlicher zweiter Betriebsmodus kann beispielsweise alternativ zum ersten Betriebsmodus aktivierbar sein, derart, daß gleichzeitig höchstens einer der beiden Betriebsmodi aktiv ist, bzw. daß die beiden Betriebsmodi gegeneinander verriegelt sind. Alternativ dazu kann der Mikroprozessor aber auch so eingerichtet sein, daß der zweite Betriebsmodus, falls erforderlich, simultan zum ersten Betriebsmodus aktivierbar ist, beispielsweise derart, daß der Mikroprozessor das wenigstens eine Ablaufprogramm ausführen kann und parallel dazu Modifikationen an wenigstens einem Ablaufprogramm, beispielsweise auch einem anderen, als dem gerade vom Mikroprozessor ausgeführten, vorgenommen werden können. Gemäß einer weiteren Ausgestaltung der Erfindung der Mikroprozessor zudem dafür eingerichtet, daß jeder der zwei Betriebsmodi ausschließlich-via Steuereingang CTL selektiv aktivierbar ist. Falls erforderlich kann der Mikroprozessor zudem auch so eingerichtet sein, daß die Aktivierung zumindest des zweiten Betriebsmodus erst nach erfolgreicher Eingabe eines entsprechend Passworts via Mensch-Maschine-Schnittstelle HMI beispielsweise mittels des ggf. darin enthaltenen Anzeige- und Bedienelements AE.

Um zumindest ab einem bestimmten - beispielsweise mit einer zuletzt erfolgten Kalibrierung bzw. Eichung des elektronischen Geräts korrespondierenden - Zeitpunkt eine Dokumentation bzw. ein Rückverfolgung von an vom Mikroprozessor auszuführenden Ablaufprogrammen allfällig vorgenommen Modifikationen zu ermöglichen, weist das erfindungsgemäße elektronische Gerät, wie in Fig. 1 schematisch dargestellt, desweiteren wenigstens eine - hier zusammen mit dem Mikroprozessor in demselben Elektronik-Gehäuse 200 untergebrachte - Speichereinheit MEM auf, die dafür eingerichtet ist, auf eine jede Aktivierung des zweiten Betriebsmodus mit einer Veränderung eines Speicherinhalts Z zu reagieren, und zwar in der Weise, daß nämlicher Speicherinhalt Z eine Häufigkeit, mit der der zweite Betriebsmodus innerhalb eines vorgegebenen Zeitraums aktiviert worden ist, repräsentiert. Bei dem vorgegebenen Zeitraum kann es sich beispielsweise um ein sich von dem vorbezeichneten, nämlich mit der zuletzt erfolgten Kalibrierung bzw. Eichung des elektronischen Geräts korrespondierenden (früheren) Zeitpunkt bis zu einem späteren, beispielsweise mit einer neuerlichen Überprüfung des Geräts korrespondierenden, Zeitpunkt erstreckendes Überwachungsintervall handeln.

Nämliche durch den Speicherinhalt Z der Speichereinheit MEM repräsentierte Häufigkeit, mit der der zweite Betriebsmodus innerhalb des vorgegebenen Zeitraums aktiviert worden ist, kann beispielsweise auch mittels des erwähnten Anzeigeelement AE visualisiert werden, um so beispielsweise mit einem in einem älteren Prüfprotokoll schriftlich festgehalten, älteren Speicherinhalt verglichen bzw. im aktuellen Prüfprotokoll entsprechend vermerkt werden zu können. Alternativ oder in Ergänzung dazu kann mittels des Anzeigeelements AE beispielsweise auch angezeigt, mithin signalisiert werden, welcher Betriebsmodus momentan aktiviert ist bzw. ob der zweite Betriebsmodus auch nach der Aktivierung des ersten Betriebsmodus jemals wieder aktiviert worden ist.

Die Speichereinheit MEM kann, wie in Fig. 1 schematisch dargestellt, beispielsweise mittels eines mit dem Mikroprozessor µC elektrisch verbundenen - beispielsweise auch zusammen mit diesem in einem einzigen Chip integrierten - persistenten, nämlich nicht-flüchtigen, gleichwohl via Mikroprozessor hinsichtlich seines Speicherinhalts veränderbaren elektronischen Speicherbausteins, beispielsweise nämlich einem elektrisch löschbaren programmierbaren Nur-Lese-Speicher, mithin mittels eines EEPROM oder eines Flash-EEPROM bzw. mittels eines auf einem solchen Speicherbaustein entsprechend reservierten Speicherbereichs gebildet sein.

Für den Fall, daß es für eine Dokumentation bzw. Rückverfolgung ausreichend ist, lediglich zu vermerken, wie oft innerhalb des vorgegebenen Zeitraums in den zweiten Betriebsmodus gewechselt worden ist, kann es beispielsweise ausreichen, wenn mittels der Speichereinheit MEM im Zusammenspiel mit dem Mikroprozessor µC ein Softwarezählwerk, nämlich eine solche Funktion eingerichtet ist, bei der Speicherinhalt Z einen Zählerstand repräsentiert und bei der der den aktuellen Zählerstand vor der Aktivierung des zweiten Betriebsmodes repräsentierende momentane Speicherinhalt Z gemäß einer mittels des Mikroprozessors µC realisierten, nämlich bei jeder Aktivierung des zweiten Betriebsmodus erneut ausgeführten einfachen Berechnungsfunktion Z = Z + I um einen vorgegebenen, nämlich jeweils und denselben Betrag I verändert wird. Im Ergebnis entspricht der aktuelle Speicherinhalt Z einem - beispielsweise zum Zeitpunkt einer jüngst zurückliegenden Abnahme bzw. Eichung des Geräts festgestellten - initialen Speicherinhalt Z', erhöht um den mit einer Anzahl N an zwischenzeitlich vorgenommenen Aktivierungen des zweiten Betriebsmodus' vervielfachten Betrag I (Z = Z'+N I), mithin kann die Anzahl N der zwischenzeitlich ausgeführten Aktivierungen des zweiten Betriebsmodus gemäß der Berechnungsvorschrift N = (Z - Z') / I auf sehr einfache Weise ermittelt werden. Daher umfaßt der Speicherinhalt Z gemäß einer weiteren Ausgestaltung der Erfindung einen Zahlenwert für eine einen Zählerstand repräsentierende Zählervariable, welcher Zahlenwert bei jeder Aktivierung des zweiten Betriebsmodus jeweils um ein vorgegebenes Inkrement, beispielsweise um Eins, erhöht oder jeweils um ein vorgegebenes Dekrement, beispielsweise um Eins, verringert wird. Für den Fall, daß der Speicherinhalt Z lediglich einem solchen Zählerstand entspricht, kann die
Speichereinheit MEM - alternativ oder in Ergänzung zum vorbezeichneten elektrisch löschbaren programmierbaren Nur-Lese-Speicher - auch als ein elektronisches Zählwerk, beispielsweise inform einer als Impulszähler konfigurierten Flip-Flop-Schaltung, ausgebildet sein, das mittels eines eine Aktivierung des zweiten Betriebsmodus repräsentierenden, beispielsweise vom Mikroprozessor ausgelösten, Schaltbefehls getriggert wird, derart, daß es auf jede neuerliche Aktivierung des zweiten Betriebsmodus mit einer inkrementellen Änderung eines den Speicherinhalt Z bildenden Schaltzustands reagiert.

Alternativ oder in Ergänzung zu den vorbezeichneten Variante, bei denen mittels der Speichereinheit MEM die Aktivierungen des zweiten Betriebsmodus gezählt werden bzw. bei denen der Speicherinhalt Z einem die Häufigkeit nämlicher Aktivierungen numerisch angebenden Zählerstand entspricht, kann - nicht zuletzt auch für den Fall, daß die Speichereinheit MEM mittels des vorbezeichneten elektronischen Speicherbausteins (EEPROM) gebildet ist - im Zusammenspiel von Mikroprozessor µC und Speichereinheit MEM zudem auch eine Protokolldatei realisiert, nämlich eine Funktion eingerichtet sein, bei der der Speicherinhalt Z einen Zeitpunkt einer Aktivierung des zweiten Betriebsmodus, beispielsweise der zuletzt vorgenommen Aktivierung, repräsentiert und bei der Speicherinhalt Z der Speichereinheit MEM gemäß einer mittels des Mikroprozessors, beispielsweise auch unter Verwendung der im Gerät ggf. vorgesehenen Echtzeituhr bzw. des im Gerät ggf. vorgesehenen Betriebsstundenzählers, realisierten, nämlich bei jeder Aktivierung des zweiten Betriebsmodus erneut ausgeführten Zeiterfassungsfunktion um einen eine aktuelle Systemzeit repräsentierenden Zeitwert ergänzt oder durch nämlichen Zeitwert ersetzt wird, ggf. auch in Kombination mit einem die Aktivierung des zweiten Betriebsmodus in Textform ausweisenden Vermerk. Nämlicher Zeitpunkt der einer Aktivierung des zweiten Betriebsmodus kann dabei beispielsweise in Form eines Datums und einer Uhrzeit oder inform einer seit einer vorherigen Inbetriebnahme inzwischen vergangenen Betriebszeit in der Speichereinheit vermerkt sein. Daher umfaßt der Speicherinhalt Z gemäß einer anderen Ausgestaltung einen Zahlenwert für eine einen Zeitpunkt, beispielsweise einem Datum und einer Uhrzeit und/oder einer seit einer vorherigen Inbetriebnahme inzwischen vergangenen Betriebszeit, einer Aktivierung des zweiten Betriebsmodus repräsentierende Zeitvariable bzw. ist der persistente Speicher dafür eingerichtet, wenigstens einen mit einer Aktivierung des zweiten Betriebsmodus korrespondierenden Zeitwert, beispielsweise also inform einer Kombination aus einem entsprechenden Datum und/oder einer entsprechenden Uhrzeit und/oder inform einer seit einer vorherigen Inbetriebnahme inzwischen vergangenen Betriebszeit, zu speichern. Alternativ oder in Ergänzung dazu kann der Speicherinhalt Z beispielsweise auch einen Zahlenwert für eine einen Zeitpunkt, insb. ein Datum und eine Uhrzeit und/oder einen Zählerstand des ggf. vorgesehenen Betriebsstundenzählers, einer Aktivierung des ersten Betriebsmodus repräsentierende Zeitvariable umfassen bzw. kann der persistente Speicher dafür eingerichtet sein, wenigstens einen mit einer Aktivierung des ersten Betriebsmodus korrespondierenden Zeitwert, etwa inform einer seit einer vorherigen Inbetriebnahme inzwischen vergangenen Betriebszeit und/oder inform einer Kombination aus einem entsprechenden Datum und/oder einer entsprechenden Uhrzeit, zu speichern. Nicht zuletzt für den Fall, daß der zweite Betriebsmodus unabhängig davon, ob der erste Betriebsmodus aktiviert oder deaktiviert ist, aktivierbar ist, kann es darüberhinaus auch von Vorteil sein, die Speichereinheit MEM dafür einzurichten, wenigstens einen mit einer Deaktivierung des zweiten Betriebsmodus korrespondierenden Zeitwert, etwa inform einer Kombination aus einem entsprechenden Datum und/oder einer entsprechenden Uhrzeit und/oder inform einer seit einer vorherigen Inbetriebnahme inzwischen vergangenen Betriebszeit, zu speichern. Desweiteren kann die Speichereinheit MEM dafür eingerichtet sein, wenigstens einen zu einem Zeitpunkt einer Aktivierung des zweiten Betriebsmodus am Datenausgang vorliegenden Datenwert, beispielsweise in Kombination mit einem entsprechenden Zeitwert, zu speichern.

Zum selektiven Aktivieren zumindest des zweiten Betriebsmodus weist das elektronische Gerät gemäß einer weiteren Ausgestaltung der Erfindung einen, beispielsweise von einem mit der Kalibrierung oder Eichung des Geräts beauftragten Prüfers, manuell betätigbaren Schalter S auf, der dafür eingerichtet ist, auf eine Betätigung hin am Steuereingang CTL des Mikroprozessors µC einen entsprechenden, nämlich den zweiten Betriebsmodus aktivierenden Signalpegelverlauf c1 zu generieren. Als Signalpegelverlauf c1 kann beispielsweise eine Bitfolge, nämlich einer mittels alternierender Signalpegel gebildeten Taktsequenz, dienen, die ein entsprechendes, nämlich die Aktivierung des zweiten Betriebsmodus auslösendes Steuerwort binär codiert; Signalpegelverlauf c1 kann aber beispielsweise auch ein einzelner Wechsel von einem eine logische Null repräsentierenden Low- auf einen eine logische Eins repräsentierenden High-Pegel oder umgekehrt ein Wechsel von einem High- auf einen Low-Pegel sein. Für den erwähnten Fall, daß der erste und der zweite Betriebsmodus lediglich alternativ aktivierbar sind, können Steuerbefehl c1 und Mikroprozessor µC in vorteilhafter Weise auch so aufeinander abgestimmt sein, daß mittels des Steuerbefehls c1 sowohl der zweite Betriebsmodus aktiviert als auch zugleich der erste Betriebsmodus deaktiviert wird. Gemäß einer weiteren Ausgestaltung ist der Schalter ferner dafür eingerichtet, auf eine entsprechende Betätigung hin am Steuereingang CTL des Mikroprozessors einen den zweiten Betriebsmodus deaktivierenden, beispielsweise auch sowohl den zweiten Betriebsmodus deaktivierenden als auch zugleich den ersten Betriebsmodus aktivierenden, Signalpegelverlauf c2, etwa inform einer entsprechenden Bitfolge, zu generieren. Beispielsweise kann der Schalter, abgestimmt auf den Mikroprozessor, hierbei auch als Wechselschalter ausgestaltet sein, derart, daß jede Betätigung des Schalters S abwechselnd entweder den den zweiten Betriebsmodus aktivierenden Signalpegelverlauf c1 oder den den ersten Betriebsmodus aktivierenden Signalpegelverlauf c2 am Steuereingang bewirkt. Wenngleich allein schon durch das Zusammenspiel von Mikroprozessor, Speichereinheit und Schalter eine verläßliche Dokumentation betreffend das, ggf. auch nicht autorisierten, Aktivierens des zweiten Betriebsmodes ermöglicht ist, kann es, nicht zuletzt aus Gründen einer entsprechend auffälligen Signalisierung dafür, daß es einer gesonderten Erlaubnis bedarf, den momentan deaktivierten zweiten Betriebsmodus zu aktivieren bzw. eine Modifikation am Ablaufprogramm vornehmen zu dürfen, den Schalter mittels eines daran angebrachten, beispielsweise mittels einer Plombe gebildeten, Siegels zu sichern. Alternativ oder in Ergänzung zu einer solchen Siegelung des Schalters kann beispielsweise auch eine entsprechender Verschlußmechanismus im Schalter integriert sein, beispielsweise derart, daß der Schalter mittels eines für einen vorgegebenen Anlagenbereich zugelassenen Generalschlüssels ab- bzw. wieder aufschließbar ist. Darüberhinaus kann der Schalter S, wie in Fig. 2 schematisch dargestellt, in vorteilhafter Weise innerhalb des Elektronik-Gehäuses 200 angeordnet sein, beispielsweise derart, daß er von außen nur dann erreichbar, mithin betätigbar ist, wenn zuvor das Elektronik-Gehäuses 200, beispielsweise durch Entfernen eines entsprechenden Verschlußdeckels, geöffnet worden ist.

Anstelle des Schalters S oder zusätzlich dazu kann die Aktivierung bzw. Deaktivierung zumindest des zweiten Betriebsmodus ggf. auch mittels des vorgenannten Adapters SI bzw. über eine damit, beispielsweise auch gemäß eines der erwähnten Industriestandards bzw. -normen IEEE 802.15.1, IEEE 802.15.4 und/oder IEC 61158, eingerichtet Kommunikationsverbindung erfolgen. Dafür ist nämlicher Adapter SI gemäß einer weiteren Ausgestaltung der Erfindung dafür eingerichtet, von einem externen Bediengerät, beispielsweise also per Funk, mittels infrarotem Licht oder via Zweidraht-Leitung, einen ein Aktivieren des zweiten Betriebsmodus anfordernden Steuerbefehl C1 zu empfangen und nämlichen Steuerbefehl C1 in den den zweiten Betriebsmodus aktivierenden Signalpegelverlauf c1 am Steuereingang CTL umzusetzen. Der Adapter kann desweiteren auch dafür vorgesehen sein, von nämlichen Bediengerät auch einen ein Aktivieren des ersten Betriebsmodus anfordernden Steuerbefehl C2 empfangen und in den den ersten Betriebsmodus aktivierenden Signalpegelverlauf c2 am Steuereingang CTL umsetzen zu können.

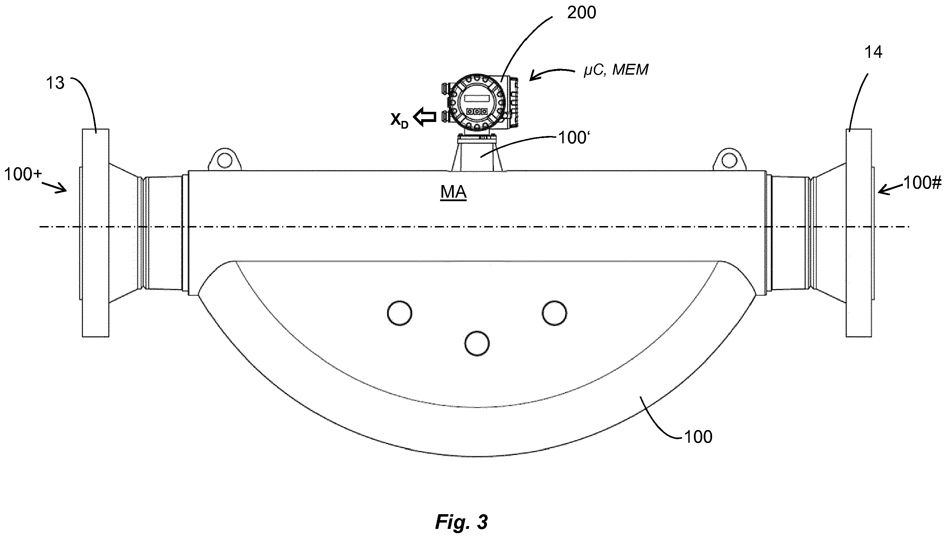

Gemäß einer weiteren Ausgestaltung der Erfindung ist das elektronische Gerät vorgesehen als ein Meßgerät, beispielsweise in Anwendungen der industriellen Meß- und Automatisierungstechnik oder im eichpflichtigen Güterverkehr, verwendet zu werden, nämlich zum Ermitteln von Meßwerten für wenigstens eine physikalische und/oder wenigstens eine chemische Meßgröße x, beispielsweise einer Dichte, einer Viskosität, einer Temperatur und/oder einem Druck eines Fluids, einer Volumendurchflußrate bzw. einer Massendurchflußrate eines in einer Leitung, insb. einer Rohrleitung oder einem Gerinne, strömenden Fluids oder einem Füllstand oder einem Grenzstand eines in einem Behälter, insb. in einem Tank oder einem Becken, vorgehaltenen Mediums, insb. einer Flüssigkeit oder einem Schüttgut. Im besonderen ist das das elektronische Gerät dafür vorgesehen, Meßwerte für wenigstens eine solche physikalische bzw. chemische Meßgröße x eines in einem Übergabesystem, beispielsweise einer Betankungsanlage oder einer Abfüllanlage, geführten Mediums zu ermitteln bzw. auszugeben. Zum sensorischen Erfassen der wenigstens einen Meßgröße x umfaßt das elektronische Gerät, wie in Fig. 2 bzw. 3 schematisch dargestellt, ferner einen - beispielsweise mittels eines schlag- und druckfesten Aufnehmer-Gehäuses 100 gegen äußere Umwelteinflüsse geschützten bzw. die Umwelt vor allfälligen Immissionen schützenden - Meßaufnehmer MA, der dafür eingerichtet ist, die wenigstens eine physikalische bzw. chemische Meßgröße zu erfassen und Meßdaten, nämlich die wenigstens eine Meßgröße repräsentierende digitale Daten S_{D} zu generieren. Meßaufnehmer kann beispielsweise ein magnetisch-induktiver Durchflußaufnehmer, ein Ultraschall-Durchflußaufnehmer, ein thermischer Massendstromsensor, ein Wirbeldurchflußsensor, ein Coriolis-Massendurchflußaufnehmer, ein vibronischer Dichteaufnehmer, ein virbronischer Viskositätsaufnehmer, ein Drucksensor, ein pH-Sensor, ein Temperatursensor etc. sein. Bei dieser Ausgestaltung der Erfindung kann das Elektronik-Gehäuse 200 beispielsweise, wie aus einer Zusammenschau der Fig. 2 und 3 ohne weiteres ersichtlich, unter Bildung eines Meßgeräts in Kompaktbauweise direkt am Meßaufnehmer MA, beispielsweise an einem außen am Aufnehmer-Gehäuse 100 vorgesehenen Halsstück 100' fixiert sein. Zudem ist der Mikroprozessor ferner dafür eingerichtet, die Meßdaten am Dateneingang zu empfangen, sowie via Dateneingang eingehende Meßdaten im ersten Betriebsmodus in Ausführung des Ablaufprogramms zu verarbeiten; dies beispielsweise derart, daß der Mikroprozessor im ersten Betriebsmodus am Datenausgang Meßwerte, nämlich in Ausführung des Ablaufprogramms und unter Verwendung der Meßdaten berechnete digitale Daten, ausgibt. Die digitalen Meßdaten wiederum können hernach, etwa um mittels des elektronischen Geräts ein zur Norm DIN IEC 60381-1 oder der DIN IEC 60381-2 konformes analoges Einheitssignal ausgeben zu können, entsprechend in ein analoges Spannungs- oder ein analoges Stromsignal, beispielsweise einen innerhalb eines Strombereichs von 4-20 mA veränderlichen Schleifenstrom, gewandelt werden. Nach einer weiteren Ausgestaltung der Erfindung ist der Mikroprozessor ferner auch dafür eingerichtet, auch im zweiten Betriebsmodus am Dateneingang eintreffende Meßdaten zu verarbeiten bzw. am Datenausgang entsprechende Meßwerte auszugeben. Ferner kann es hierbei auch von Vorteil sein, etwa um eine mittels geeichtem Gerät gemessene Charge des Mediums von einer später ggf. mit einem nicht mehr geeichten Gerät gemessenen Charge des Mediums auch nachträglich separieren zu können, die Speichereinheit MEM so einzurichten, daß diese wenigstens einen vor einem Zeitpunkt einer Aktivierung des zweiten Betriebsmodus vom Mikroprozessor ermittelten Meßwert - beispielsweise den unmittelbar vor nämlicher Aktivierung bzw. den zuletzt ermittelten Meßwert - zu speichern, ggf. auch in Kombination mit einer seit einer vorherigen Inbetriebnahme inzwischen vergangenen Betriebszeit und/oder in Kombination mit einem entsprechenden Datum und/oder einer entsprechenden Uhrzeit.

## Patentansprüche

1. Elektronisches Gerät, umfassend:
- einen Mikroprozessor (µC) mit einem Dateneingang (IN), mit einem Datenausgang (OUT) und mit einem Steuereingang (CTL);
- sowie wenigstens eine, insb. mittels eines persistenten Speicherbausteins gebildete, Speichereinheit (MEM);
- wobei der Mikroprozessor (µC) wenigstens zwei, insb. ausschließlich, via Steuereingang, insb. mittels binärer Signalpegel bzw. damit gebildeten Taktsequenzen, selektiv aktivierbare Betriebsmodi aufweist und dafür eingerichtet ist,
-- in einem ersten Betriebsmodus wenigstens ein vorgegebenes Ablaufprogramm auszuführen, um via Dateneingang eingehende digitale Daten, insb. zu digitalen Meßwerten, zu verarbeiten und/oder um digitale Daten, insb. in Echtzeit, am Datenausgang auszugeben,
-- und in einem, insb. alternativ oder simultan zum ersten Betriebsmodus aktivierbaren, zweiten Betriebsmodus reprogrammierbar zu sein, derart, daß wenigstens ein Wert eines Parameters, der die Ausführung des wenigstens einen Ablaufprogramms durch den Mikroprozessor beeinflußt, veränderbar ist; **dadurch gekennzeichnet, daß**
- die Speichereinheit (MEM) dafür eingerichtet ist, auf eine jede Aktivierung des zweiten Betriebsmodus mit einer Veränderung eines Speicherinhalts (Z) zu reagieren, derart, daß nämliche Speicherinhalt (Z) eine Häufigkeit, mit der der zweite Betriebsmodus innerhalb eines vorgegebenen Zeitraums aktiviert worden ist, repräsentiert.

2. Elektronisches Gerät nach einem der vorherigen Ansprüche,
- wobei der Mikroprozessor dafür eingerichtet ist, im ersten Betriebsmodus nicht reprogrammierbar zu sein, insb. derart, daß der Wert keines die Ausführung des wenigstens einen Ablaufprogramms durch den Mikroprozessor beeinflussenden Parameters veränderbar ist; und/oder
- wobei der Speicherinhalt einen Zahlenwert für eine einen Zählerstand repräsentierende Zählervariable umfaßt, welcher Zahlenwert bei Aktivierung des zweiten Betriebsmodus jeweils um einen vorgegebenen Betrag, insb. Eins, verändert wird, insb. nämlich jeweils um ein vorgegebenes Inkrement erhöht oder jeweils um ein vorgegebenes Dekrement verringert wird; und/oder
- wobei der Speicherinhalt einen Zahlenwert für eine einen Zeitpunkt, insb. einer Betriebszeit und/oder einem Datum und einer Uhrzeit, einer Aktivierung des zweiten Betriebsmodus repräsentierende Zeitvariable umfaßt; und/oder
- wobei der Speicherinhalt einen Zahlenwert für eine einen Zeitpunkt, insb. einer Betriebszeit und/oder einem Datum und einer Uhrzeit, einer Aktivierung des ersten Betriebsmodus repräsentierende Zeitvariable umfaßt; und/oder
- wobei die Speichereinheit (MEM) dafür eingerichtet ist, wenigstens einen mit einer Aktivierung des ersten Betriebsmodus korrespondierenden Zeitwert, insb. inform einer seit einer vorherigen Inbetriebnahme inzwischen vergangenen Betriebszeit und/oder inform einer Kombination aus einem entsprechenden Datum und/oder einer entsprechenden Uhrzeit, zu speichern.

3. Elektronisches Gerät nach einem der vorherigen Ansprüche,
- wobei die Speichereinheit (MEM) dafür eingerichtet ist, wenigstens einen mit einer Aktivierung des zweiten Betriebsmodus korrespondierenden Zeitwert, insb. inform einer Kombination aus einem entsprechenden Datum und/oder einer entsprechenden Uhrzeit, zu speichern; und/oder
- wobei die Speichereinheit (MEM) dafür eingerichtet ist, wenigstens einen zu einem Zeitpunkt einer Aktivierung des zweiten Betriebsmodus am Datenausgang vorliegenden Datenwert, insb. in Kombination mit einer seit einer vorherigen Inbetriebnahme inzwischen vergangenen Betriebszeit und/oder in Kombination mit einem entsprechenden Datum und/oder einer entsprechenden Uhrzeit, zu speichern.

4. Elektronisches Gerät nach einem vorherigen Anspruch, wobei die Speichereinheit (MEM) dafür eingerichtet ist, wenigstens einen mit einer Deaktivierung des zweiten Betriebsmodus korrespondierenden Zeitwert, insb. inform einer seit einer vorherigen Inbetriebnahme inzwischen vergangenen Betriebszeit und/oder inform einer Kombination aus einem entsprechenden Datum und/oder einer entsprechenden Uhrzeit, zu speichern.

5. Elektronisches Gerät nach einem der vorherigen Ansprüche, weiters umfassend: einen Adapter (SI), der dafür eingerichtet ist, von einem externen Bediengerät, insb. per Funk, mittels infrarotem Licht oder via Zweidraht-Leitung, einen ein Aktivieren des zweiten Betriebsmodus anfordernden Steuerbefehl (C1) zu empfangen und in einen den zweiten Betriebsmodus aktivierenden Signalpegelverlauf (c1), insb. inform einer Bitfolge, am Steuereingang (CTL) des Mikroprozessors (µC) umzusetzen.

6. Elektronisches Gerät nach Anspruch 5, wobei der Adapter (SI) dafür eingerichtet ist, nämlichen Steuerbefehl (C1) vom Bediengerät drahtlos, insb. per Funk oder mittels infrarotem Licht, und/oder leitungsgebunden, insb. via Zweidraht-Leitung, zu empfangen.

7. Elektronisches Gerät nach Anspruch 5, wobei der Adapter dafür eingerichtet ist, nämlichen, insb. gemäß einem Industriestandard IEEE 802.15.1 (Bluetooth) für Kurzstrecken Funleverbindungen und/oder gemäß einem Industriestandard IEEE 802.15.4 (WirelessHART) übertragenen, Steuerbefehl vom Bediengerät drahtlos per Funk zu empfangen.

8. Elektronisches Gerät nach Anspruch 5, wobei der Adapter dafür eingerichtet ist, nämlichen, insb. gemäß einer Norm IEC 61158 (HART) übertragenen, Steuerbefehl vom Bediengerät leitungsgebunden via Zweidraht-Leitung zu empfangen.

9. Elektronisches Gerät nach einem der vorherigen Absprüche, weiters umfassend: einen manuell betätigbaren, insb. siegelbaren und/oder abschließbaren, Schalter (S), der dafür eingerichtet ist, am Steuereingang des Mikroprozessors einen den zweiten Betriebsmodus aktivierenden, insb. sowohl den zweiten Betriebsmodus aktivierenden als auch zugleich den ersten Betriebsmodus deaktivierende, Signalpegelverlauf, insb. inform einer Bitfolge, zu generieren.

10. Elektronisches Gerät nach Anspruch 9, wobei der Schalter dafür eingerichtet ist, am Steuereingang des Mikroprozessors einen den zweiten Betriebsmodus dealctivierenden, insb. sowohl den zweiten Betriebsmodus deaktivierenden als auch zugleich den ersten Betriebsmodus aktivierenden, Signalpegelverlauf, insb. inform einer Bitfolge, zu generieren.

11. Elektronisches Gerät nach einem der Ansprüche 9 bis 10, weiters umfassend: ein am Schalter angebrachtes, insb. mittels einer Plombe gebildetes oder mittels eines Klebeetiketts gebildetes, Siegel.

12. Elektronisches Gerät nach einem der vorherigen Ansprüche,
- weiters umfassend ein Anzeigeelement (AE), das dafür eingerichtet ist, die durch den Speicherinhalt (Z) der Speichereinheit (MEM) repräsentierte Häufigkeit, mit der der zweite Betriebsmodus innerhalb des vorgegebenen Zeitraums aktiviert worden ist, zu visualisieren und/oder zu signalisieren, welcher Betriebsmodus momentan aktiviert ist; und/oder
- weiters umfassend ein Elektronik-Gehäuse innerhalb dem der Mikroprozessor sowie der persistente Speicher untergebracht sind.

13. Elektronisches Gerät nach einem der vorherigen Ansprüche, weiters umfassend einen Meßaufnehmer - insb. einen magnetisch-induktiven Durchflußaufnehmer, einen Ultraschall-Durchflußaufnehmer, einen thermischen Massenstromsensor, einen Wirbeldurchflußsensor, einen Coriolis-Massendurchflußaufnehmer, einen vibronischen Dichteaufnehmer, einen virbronischen Viskositätsaufnehmer, einen Drucksensor, einen pH-Sensor, einen Temperatursensor etc. - zum Erfassen einer physikalischen und/oder chemischen Meßgröße - insb. einer Dichte, einer Viskosität, einer Temperatur und/oder einem Druck eines Fluids, einer Volumendurchflußrate bzw. einer Massendurchflußrate eines in einer Leitung geführten Fluids, eines Füllstands oder eines Grenzstands eines in einem Behälter vorgehaltenen Mediums - und zum Generieren von Meßdaten, nämlich die wenigstens eine Meßgröße repräsentierenden digitalen Daten, wobei der Mikroprozessor dafür eingerichtet ist, die Meßdaten am Dateneingang zu empfangen, und wobei der Mikroprozessor dafür eingerichtet ist, via Dateneingang eingehende Meßdaten im ersten Betriebsmodus in Ausführung des Ablaufprogramms zu verarbeiten.

14. Elektronisches Gerät nach dem vorherigen Anspruch, wobei der Mikroprozessor dafür eingerichtet ist, im ersten Betriebsmodus am Datenausgang Meßwerte, nämlich in Ausführung des Ablaufprogramms und unter Verwendung der Meßdaten berechnete digitale Daten, auszugeben.

15. Elektronisches Gerät nach dem vorherigen Anspruch, wobei der Mikroprozessor dafür eingerichtet ist, auch im zweiten Betriebsmodus am Datenausgang Meßwerte auszugeben.

16. Elektronisches Gerät nach einem der Ansprüche 13 bis 15, wobei die Speichereinheit (MEM) dafür eingerichtet ist, wenigstens einen, insb. ummittelbar und/oder zuletzt, vor einem Zeitpunkt einer Aktivierung des zweiten Betriebsmodus vom Mikroprozessor ermittelten Meßwert, insb. in Kombination mit einer seit einer vorherigen Inbetriebnahme inzwischen vergangenen Betriebszeit und/oder in Kombination mit einem entsprechenden Datum und/oder einer entsprechenden Uhrzeit, zu speichern.

17. Verwenden eines elektronischen Geräts gemäß eines der vorherigen Ansprüche im eichpflichtigen Güterverkehr, insb. zum Ermitteln von Meßwerten für eine physikalische oder chemische Meßgröße eines, insb. fluiden, Mediums, insb. eines Gase oder einer Flüssigkeit.

18. Verfahren zum Betreiben eines elektronischen Geräts gemäß eines der Ansprüche 1 bis 16, welches Verfahren umfaßt:
- Aktivieren des ersten Betriebsmodus zum Ausführen des wenigstens einen Ablaufprogramms mittels des Mikroprozessors;
- Aktivieren des zweiten Betriebsmodus zum Reprogrammieren des Mikroprozessors;
- und Verändern des Speicherinhalts (Z) um einen vorgegeben Betrag (I), derart, daß nämlicher Speicherinhalt (Z) eine um nämlichen Betrag (I) erhöhte Häufigkeit, mit der der zweite Betriebsmodus innerhalb eines vorgegebenen Zeitraums aktiviert worden ist, repräsentiert.

## Claims

1. Electronic device, comprising:
- a microprocessor (µC) with a data input (IN), a data output (OUT) and a control input (CTL);
- as well as at least one memory unit (MEM), particularly consisting of a persistent storage module;
- wherein the microprocessor (µC) has at least two operating modes, which can be activated selectively, particularly exclusively, via a control input, particularly via a binary signal level or clock cycles formed therewith, and is designed to
-- execute, in a first operating mode, at least one predefined sequential program, in order to process digital data coming in via the data input particularly into digital measured values and/or to output digital data at the data output, particularly in real time,
-- and, in a second operating mode, particularly one that can be activated alternatively or simultaneously with the first operating mode, to be reprogrammable in such a way that at least a value of a parameter, which influences the execution of the at least one sequential program by the microprocessor, can be modified;
**characterized in that**
the memory unit (MEM) is designed to respond to every activation of the second operating mode with a change in the memory content (Z) in such a way that said memory content (Z) represents a frequency at which the second operating mode has been activated within a predefined period of time.

2. Electronic device as claimed in one of the previous claims,
- wherein the microprocessor is designed to be not be reprogrammable in a first operating mode, particularly in such a way that the value of no parameter that influences the execution of the at least one sequential program by the microprocessor can be modified; and/or
- wherein the memory content comprises a numerical value for a counter variable representing a counter reading, wherein, when the second operating mode is activated, said counter value is changed by a predefined amount, particularly by one, particularly is increased each time by a predefined increment, or is reduced each time by a predefined decrement; and/or
- wherein the memory content comprises a numerical value for a time variable representing a time, particularly an operating time and/or a date and a time, of an activation of the second operating mode; and/or
- wherein the memory content comprises a numerical value for a time variable representing a time, particularly an operating time and/or a date and a time, of an activation of the first operating mode; and/or
- wherein the memory unit (MEM) is designed to save at least one time value corresponding to an activation of the first operating mode, particularly in the form of an operating time that has passed since a previous commissioning and/or in the form of a combination of a corresponding date and/or a corresponding time.

3. Electronic device as claimed in one of the previous claims,
- wherein the memory unit (MEM) is designed to save at least one time value corresponding to an activation of the second operating mode, particularly in the form of a combination of a corresponding date and/or a corresponding time; and/or
- wherein the memory unit (MEM) is designed to save at least one data value present at the data output at a time of an activation of the second operating mode, particularly in combination with an operating time that has passed since a previous commissioning and/or in combination with a corresponding date and/or a corresponding time.

4. Electronic device as claimed in a previous claim, wherein the memory unit (MEM) is designed to save at least one time value that corresponds to a deactivation of the second operating mode, particularly in the form of an operating time that has passed since a previous commissioning and/or in the form of a combination of a corresponding date and/or a corresponding time.

5. Electronic device as claimed in one of the previous claims, further comprising; an adapter (SI), which is designed to receive a control command (C1) from an external operating device, particularly via radio technology, using infrared light or via a two-wire cable, that demands an activation of the second operating mode and to convert this into a signal level pattern (c1) that activates the second operating mode, particularly in the form of a bit sequence, at the control input (CTL) of the microprocessor (µC).

6. Electronic device as claimed in Claim 5, wherein the adapter (SI) is designed to receive said control command (C1) from the operating device wirelessly, particular via radio communication or infrared light, and/or via wired connection, particularly via a two-wire cable.

7. Electronic device as claimed in Claim 5, wherein the adapter is designed to receive said control command from the operating device wirelessly via radio communication, said command particularly being transmitted in accordance with an industry standard IEEE 802.15.1 (Bluetooth) for short-distance radio connections, and/or in accordance with an industrial standard IEEE 802.15.4 (WirelessHART).

8. Electronic device as claimed in Claim 5, wherein the adapter is designed to receive said control command from the operating device via wired communication via a two-wire cable, said command particularly being transmitted in accordance with a standard IEC 61158 (HART).

9. Electronic device as claimed in one of the previous claims, further comprising a switch (S) which can be manually activated, particularly a switch that can be sealed and/or locked, which is designed to generate, at the control input of the microprocessor, a signal level pattern, particularly in the form of a bit sequence, that activates the second operating mode, particularly a signal level pattern that both activates the second operating mode and deactivates the first operating mode at the same time.

10. Electronic device as claimed in Claim 9, wherein the switch is designed to generate, at the control input of the microprocessor, a signal level pattern, particularly in the form of a bit sequence, that deactivates the second operating mode, particularly a signal level pattern that both deactivates the second operating mode and activates the first operating mode at the same time.

11. Electronic device as claimed in one of the Claims 9 to 10, further comprising: a seal fitted on the switch, particularly a seal formed by a lead seal or an adhesive sticker.

12. Electronic device as claimed in one of the previous claims,
- further comprising a display element (AE), that is designed to visualize the frequency , represented by the memory contents (Z) of the memory unit (MEM), at which the second operating mode has been activated within the specified period of time and/or to signal which operating mode is currently activated; and/or
- further comprising an electronics housing in which the microprocessor and the persistent memory are accommodated.

13. Electronic device as claimed in one of the previous claims, further comprising a sensor - particularly an electromagnetic flow sensor, an ultrasonic flow sensor, a thermal mass flow sensor, a vortex flow sensor, a Coriolis mass flow sensor, a vibronic density sensor, a vibronic viscosity sensor, a pressure sensor, a pH sensor, a temperature sensor etc. - to measure a physical and/or chemical measured variable - particularly a density, a viscosity, a temperature and/or a pressure of a fluid, a volume flow rate or a mass flow rate of a fluid conducted in a pipe, a level or a point limit or a medium held in a vessel - and to generate measured data, particularly digital data representing the at least one measured variable, wherein the microprocessor is designed to receive the measuring data at the data input, and wherein the microprocessor is designed to process measuring data, which are received via the data input, in the first operating mode with the execution of the sequential program.

14. Electronic device as claimed in the previous claim, wherein the microprocessor is designed to output, in the first operating mode, measured values at the data output, specifically with the execution of the sequential program and digital data calculated using the measured data.

15. Electronic device as claimed in the previous claim, wherein the microprocessor is also designed to output measured values at the data output in the second operating mode.

16. Electronic device as claimed in one of the Claims 13 to 15, wherein the memory unit (MEM) is designed to save at least one measured value, particularly determined by the microprocessor, particularly immediately and/or most recently before a time of an activation of the second operating mode, particularly in combination with an operating time that has passed since a previous commissioning, and/or in combination with a corresponding date and/or a corresponding time.

17. Use of an electronic device as claimed in one of the previous claims in custody transfer applications, particularly to determine measured values for a physical or chemical measured variable of a medium, particularly a fluid medium, particularly a gas or a liquid.

18. Procedure for operating an electronic device as claimed in one of the Claims 1 to 16, wherein said procedure comprises:
- Activation of the first operating mode to execute the at least one sequential program using the microprocessor;
- Activation of the second operating mode to reprogram the microprocessor;
- and modification of the memory content (Z) by a predefined amount (I) in such a way that said memory content (Z) represents a frequency, increased by said amount (I), at which the second operating mode has been activated within a predefined period of time.

## Revendications

1. Appareil électronique, comprenant :
- un microprocesseur (µC) avec une entrée de données (IN), une sortie de données (OUT) et une entrée de commande (CTL) ;
- ainsi qu'au moins une unité de mémoire (MEM), notamment composée d'un module de mémoire permanente ;
- pour lequel le microprocesseur (µC) comprend au moins deux modes de fonctionnement activables de façon sélective, notamment exclusivement via une entrée de commande, notamment au moyen de niveaux de signal binaires ou de séquences d'horloge formées de ces derniers, modes qui sont conçus pour
-- exécuter, dans un premier mode de fonctionnement, au moins un programme séquentiel prédéfini afin de traiter les données numériques entrant via l'entrée de données, notamment de les convertir en valeurs mesurées numériques, et/ou afin de délivrer, notamment en temps réel, les données numériques sur la sortie de données,
-- et dans un deuxième mode de fonctionnement, notamment activable consécutivement ou simultanément au premier mode de fonctionnement, pour être reprogrammable de telle sorte qu'au moins une valeur d'un paramètre, qui influence l'exécution de l'au moins un programme séquentiel par le microprocesseur, soit modifiable ;
**caractérisé en ce que**
l'unité de mémoire (MEM) est conçue afin de réagir à chaque activation du deuxième mode de fonctionnement avec une modification du contenu de la mémoire (Z), de telle sorte que ce même contenu de mémoire (Z) représente une fréquence à laquelle le deuxième mode de fonctionnement a été activé au sein d'une période de temps prédéfinie.

2. Appareil électronique selon l'une des revendications précédentes,
- pour lequel le microprocesseur est conçu afin de ne pas être reprogrammable dans le premier mode de fonctionnement, notamment de telle sorte que la valeur d'aucun paramètre influençant l'exécution de l'au moins un programme séquentiel par le microprocesseur ne soit modifiable ; et/ou
- pour lequel le contenu de la mémoire comprend une valeur numérique pour une variable de compteur représentant une valeur de compteur, laquelle valeur numérique est modifiée, en cas d'activation du deuxième mode de fonctionnement, à chaque fois d'une valeur prédéfinie, notamment de un, notamment augmentée à chaque fois d'un incrément prédéfini ou diminuée à chaque fois d'un décrément prédéfini ; et/ou
- pour lequel le contenu de la mémoire comprend une valeur numérique pour une variable de temps représentant un instant, notamment un temps de fonctionnement et/ou une date et une heure, une activation du deuxième mode de fonctionnement ; et/ou
- pour lequel le contenu de la mémoire comprend une valeur numérique pour une variable de temps représentant un instant, notamment un temps de fonctionnement et/ou une date et une heure, une activation du premier mode de fonctionnement ; et/ou
- pour lequel l'unité de mémoire (MEM) est conçue afin d'enregistrer au moins une valeur de temps correspondant à une activation du premier mode de fonctionnement, notamment sous la forme d'un temps de fonctionnement écoulé depuis une mise en service précédente et/ou sous la forme d'une combinaison composée d'une date correspondante et/ou d'une heure correspondante.

3. Appareil électronique selon l'une des revendications précédentes,
- pour lequel l'unité de mémoire (MEM) est conçue afin d'enregistrer au moins une valeur de temps correspondant à une activation du deuxième mode de fonctionnement, notamment sous la forme d'une combinaison composée d'une date correspondante et/ou d'une heure correspondante ; et/ou
- pour lequel l'unité de mémoire (MEM) est conçue afin d'enregistrer au moins une valeur de donnée présente sur la sortie de données à un instant d'une activation du deuxième mode de fonctionnement, notamment en combinaison avec un temps de fonctionnement écoulé depuis une mise en service précédente et/ou en combinaison avec une date correspondante et/ou une heure correspondante.

4. Appareil électronique une revendication précédente, pour lequel l'unité de mémoire (MEM) est conçue afin d'enregistrer au moins une valeur de temps correspondant à une désactivation du deuxième mode de fonctionnement, notamment sous la forme d'un temps de fonctionnement écoulé depuis une mise en service précédente et/ou sous la forme d'une combinaison composée d'une date correspondante et/ou d'une heure correspondante.

5. Appareil électronique selon l'une des revendications précédentes, comprenant en outre : un adaptateur (SI), lequel est conçu afin de recevoir une instruction de commande (C1) demandant une activation du deuxième mode de fonctionnement depuis un appareil de commande externe, notamment via une liaison radio, au moyen d'une lumière infrarouge ou via un câble bifilaire, et à la convertir en une variation de niveau de signal (c1) activant le deuxième mode de fonctionnement, notamment sous la forme d'une chaîne de bits, sur l'entrée de commande (CTL) du microprocesseur (µC).

6. Appareil électronique selon la revendication 5, pour lequel l'adaptateur (SI) est conçu afin de recevoir l'instruction de commande (C1) par l'appareil de commande via une liaison sans fil, notamment via liaison radio ou au moyen de lumière infrarouge, et/ou via une liaison filaire, notamment via un câble bifilaire.

7. Appareil électronique selon la revendication 5, pour lequel l'adaptateur est conçu afin de recevoir l'instruction de commande par l'appareil de commande via une liaison radio sans fil, transmise notamment selon une norme industrielle IEEE 802.15.1 (Bluetooth) pour les liaisons radio courtes distances et/ou selon une norme industrielle IEEE 802.15.4 (WirelessHART).

8. Appareil électronique selon la revendication 5, pour lequel l'adaptateur est conçu afin de recevoir une instruction de commande par l'appareil de commande via une liaison bifilaire, notamment transmise selon une norme IEC 61158 (HART).

9. Appareil électronique selon l'une des revendications précédentes, comprenant en outre : un interrupteur (S) actionnable manuellement, notamment scellable et/ou verrouillable, qui est conçu afin générer sur l'entrée de commande du microprocesseur une variation de niveau de signal, notamment sous la forme d'une chaîne de bits, activant le deuxième mode de fonctionnement, notamment activant le deuxième mode de fonctionnement et désactivant à la fois le premier mode de fonctionnement.

10. Appareil électronique selon la revendication 9, pour lequel l'interrupteur est conçu afin de générer sur l'entrée de commande du microprocesseur une variation de niveau de signal, notamment sous la forme d'une chaîne de bits, désactivant le deuxième mode de fonctionnement, notamment désactivant le deuxième mode de fonctionnement et activant à la fois le premier mode de fonctionnement.

11. Appareil électronique selon l'une des revendications 9 à 10, comprenant en outre : un sceau installé sur l'interrupteur, notamment constitué d'un plomb ou d'une étiquette autocollante.

12. Appareil électronique selon l'une des revendications précédentes,
- comprenant en outre un élément d'affichage (AE), lequel est conçu afin de visualiser la fréquence représentée par le contenu (Z) de l'unité de mémoire (MEM), fréquence à laquelle le deuxième mode de fonctionnement a été activé au sein d'une période prédéfinie, et/ou afin de signaler quel mode de fonctionnement est actuellement activé ; et/ou
- comprenant en outre un boîtier électronique, dans lequel sont logés le microprocesseur et la mémoire permanente.

13. Appareil électronique selon l'une des revendications précédentes, comprenant en outre un capteur - notamment un débitmètre magnéto-inductif, un débitmètre à ultrasons, un capteur de débit massique thermique, un débitmètre vortex, un débitmètre massique Coriolis, un capteur de densité vibronique, un capteur de viscosité vibronique, un capteur de pression, un capteur pH, un capteur de température, etc. - pour la mesure d'une grandeur physique et/ou chimique - notamment une densité, une viscosité, une température et/ou une pression d'un fluide, un débit volumique ou un débit massique d'un fluide acheminé dans une conduite, un niveau ou un seuil de niveau d'un produit contenu dans un réservoir - et pour la génération de données de mesure, notamment des données numériques représentant l'au moins une grandeur de mesure,
le microprocesseur étant conçu afin de recevoir les données de mesure sur l'entrée de données, et le microprocesseur étant conçu afin de traiter les données de mesure entrant via l'entrée de données dans le premier mode de fonctionnement, en exécutant le programme séquentiel.

14. Appareil électronique selon la revendication précédente, pour lequel le microprocesseur est conçu afin de délivrer, dans le premier mode de fonctionnement, les valeurs mesurées sur la sortie de données, notamment en exécutant le programme séquentiel, et les données numériques calculées au moyen des données de mesure.

15. Appareil électronique selon la revendication précédente, pour lequel le microprocesseur est conçu afin de délivrer des valeurs de mesure sur la sortie de données, également dans le deuxième mode de fonctionnement.

16. Appareil électronique selon l'une des revendications 13 à 15, pour lequel l'unité de mémoire (MEM) est conçue afin de mémoriser au moins une valeur mesurée, notamment déterminée par le microprocesseur immédiatement avant un instant d'une activation du deuxième mode de fonctionnement, notamment en combinaison avec un temps de fonctionnement écoulé depuis une mise en service précédente et/ou en combinaison avec une date correspondante et/ou une heure correspondante.

17. Utilisation d'un appareil électronique selon l'une des revendications précédentes dans le domaine de la métrologie légale, lequel appareil est notamment destiné à la détermination de valeurs mesurées pour une grandeur physique ou chimique d'un produit, notamment fluide, notamment un gaz ou un liquide.

18. Procédé destiné à l'exploitation d'un appareil électronique selon l'une des revendications 1 à 16, lequel procédé comprend :
- Activation du premier mode de fonctionnement pour l'exécution de l'au moins un programme séquentiel au moyen du microprocesseur ;
- Activation du deuxième mode de fonctionnement pour la reprogrammation du microprocesseur ;
- et modification du contenu de mémoire (Z) d'une valeur prédéfinie (I), de telle sorte que ce même contenu de mémoire représente une fréquence augmentée de la valeur (I), fréquence à laquelle le deuxième mode de fonctionnement a été activé au sein d'une période prédéfinie.
